# EUROPEAN PATENT SPECIFICATION

(11) **EP 1 639 886 B1**
(45) Date of publication and mention of the grant of the patent: **27.02.2008**
(21) Application number: 05108555.3
(22) Date of filing: 16.09.2005
(51) Int. Cl.: A01G 9/10

(54) **Process for the preparation of a biodegradable composite substrate for the growth of gamic or agamic propagation plants**
Verfahren für die Vorbereitung eines biologischen abbaubaren Verbundsubstrats für das Wachstum von "gam" und "agam" übertragenden Pflanzen
Procédé pour la préparation d'un substrat composite biodégradable pour la croissance de plantes avec propagation "gamique" et "agamique"

(30) Priority: 17.09.2004 IT MI20041786
(43) Date of publication of application: 29.03.2006
(73) Proprietor: Martini S.p.A., 43058 Coenzo di Sorbolo (Parma) (IT)
(72) Inventor: Martini, Novella, 43058, SORBOLO (Parma) (IT); Martini, Fulvio, 43058, SORBOLO (Parma) (IT)
(74) Representative: De Gregori, Antonella

(56) References cited:
- EP-A- 0 809 429
- EP-A- 1 192 852
- WO-A-94/00004

## Description

The present invention relates to a process for the preparation of a biodegradable composite substrate for the growth of plants with gamic or agamic propagation.

In particular, the present invention relates to a process for the production of a self-supporting, composite aggregate substrate, suitable for the growth of vegetative parts of plants.

As is known, many agrarian crops are sown or transplanted or planted directly on site, whereas others are sown or transplanted or planted first in a protected environment, where they spend the first part of their cycle, until reaching the seedling phase, and are then transferred to fields or greenhouses where they complete their productive cycle.

Modern nursery techniques envisage the sowing of seeds or implantation of vegetative parts of plants in a suitable germination substrate (for seeds) or rooting substrate (for vegetative parts), which is maintained under optimum conditions of humidity, light and nutritive availability in specific protected structures, called seed-plots or nurseries. Subsequently, in order to reduce stress for the seedling after bedding, the procedure passed from transplanting "bare root" seedlings, obtained by tearing the seedlings themselves from the germination or rooting substrate, to the transplanting of seedlings having a small "loaf" of substrate, where most of the tiny root system grows. In this way, this does not undergo traumas and can rapidly restart its growth as soon as the seedling is transferred to its definite site: field or production greenhouse.

Germination or rooting substrates generally consist of peat, peat amendant compounds, agrarian soil, sand, expanded clay, perlite, pumice, vermiculite and the like, in various proportions, which are arranged in seed-trays or rooting trays.

More recently, various types of substrates have been proposed which do not need to be arranged in seed-trays or rooting trays as they are previously aggregated and kept in consistent forms, thanks to the use of binding synthesis substances.

One of these substances with a binding action consists of hydrophilic polyurethanes, whose prepolymers are mixed in different percentages with the different matrixes dispersed in water. After a suitable mixing and hardening phase, the coherent mass is obtained, which is arranged in suitable forms.

Numerous invention patents have been gradually proposed, with few variations, among which American patent 3,805,531 and then U.S. Patent 4,175,355 which indicates the minimum concentration of polyurethane as 15% by weight with respect to the dry product, below which the characteristics of the cube are unsatisfactory. American patent 5,209,014 discloses how, by varying the composition of the matrix, it is possible to reduce the concentration of polyurethane to 6-8% of the "ground turf mixture" of the matrix component, without diminishing the characteristics of the cube.

In other cases (U.S. Patent 3,373,009) fertilizing matrixes are considered, added to the prepolymers in a ratio of 65% of its weight before the reaction, or mineral matrixes, such as perlite and vermiculite (U.S. Patent 5,791,085) or seeds dispersed in water (U.S. Patent 3,812,619). In a series of subsequent patents, Dedolph (U.S. Patent 4,034,508; U.S. Patent 4,175,355; U.S. Patent 4,213,273; U.S. Patent 4,495,310) discovered the possibility of reacting the plastic material in situ with 20-80% of a mixture of soil and subsequently developed various transplanting systems on site of seedlings obtained starting from seeds sown on cubes of soil and polymer.

American patent application U.S. 2004049980 discloses a process for the production of a growth system destined for agricultural use, which envisages the formation of a semi-liquid paste (slurry) containing an aggregate, a polyurethane prepolymer, glycol, a plasticizer and water, its mixing in order to initiate the polymerization of the polyurethane resin which is completed inside suitable containers.

It has been found, however, that against an increase in the consistency and porosity of the substrate with an increase in the concentration of polyurethane, the presence of the latter not only increases the costs, but also induces negative phytotoxic phenomena in the plant which are manifested by delayed growth.

Another drawback derives from the profile of environmental compatibility as the use of plasticizers creates numerous problems at the expense of the biocompatibility of the substrate, should this be inserted in agrarian ground and, more generally, in an unlimited environment. In this respect, the International Agency for Cancer Research has classified dioctyl phthalate, one of the plasticizers used in the known art, as a "possible carcinogenic agent for human beings", whereas Nalli et al. [in: Biodegradation 13:343-352, 2002], after pointing out that "more serious problems associated with the use of these mobile plasticizers can be their long-term effects as endocrine destroyers, i.e. of hormone-like substances which can cause the destruction of the normal embryonic development and reproductive success of organisms", found that plasticizers are difficult to biodegrade on the part of micro-organisms, and, in particular, one of their metabolites, 2-ethyl-hexanoic acid, is extremely toxic and reluctant to further degradation. To these results, those of other researchers were added [Cartwright et Al. In: Environ. Toxicol. Chem. 19:1253-1261, 2000].

European patent EP 0 809 429B1 also discloses a method for the preparation of an open cell growth system which comprises the formation of a semi-liquid paste (slurry) consisting of an aggregate, a urethane prepolymer and water and the subsequent mixing of the paste at a temperature lower than 20°C, preferably lower than 5°C, for a period of time ranging from 30 to 300 seconds.

The above mixing times and temperature are considered critical conditions in the patent for obtaining a suitable end-product, having stability and adequate spaces for englobing air (macroporosity).

The process of the known art is therefore subject to specific operating restrictions as the mixing phase of the paste requires strictly controlled and monitored conditions to avoid strongly jeopardizing the quality of the end-product.

The present invention derives from the necessity of overcoming the limits imposed by the technology used in the above patent in order to make the process more flexible and overcome the disadvantages of the known art.

One of the general objectives of the invention consists in providing a flexible process for the production of a biodegradable composite substrate for the growth of gamic and agamic propagation plants.

A further objective of the invention consists in providing a process for the production of a biodegradable composite substrate for the growth of seedlings which favours the use of a specific hydrophilic synthetic prepolymer which does not require a strict control of the reaction temperatures in the mixing phase with water.

Another objective of the invention consists in providing a process for the preparation of a self-supporting biodegradable composite substrate suitable for the growth of plants which has a high water retention capacity and can be effected with low production costs.

The objectives established for the present invention are achieved by means of a process for the preparation of a biodegradable composite substrate according to claim 1.

Further characteristics of the composite substrate according to the invention are specified in the subsequent dependent claims 2-10.

According to a general aspect of the invention, a process is provided for the preparation of a biodegradable composite substrate for the growth of plants with gamic or agamic propagation which comprises mixing for a short period of time a matrix of a natural origin, water and a selected hydrophilic polyurethane prepolymer with a slow polymerization polymer to form a paste (slurry) which rapidly hardens forming open cells (macroporosity) and binds the natural matrix.

The term slow polymerization polyurethane prepolymer refers to a polymer which has a curing time conveniently ranging from 8 to 12 minutes.

The present invention derives from the assertion that the use of a specific polyurethane prepolymer with a low reactivity allows a self-supporting composite substrate to be obtained, with high water retention properties without the necessity of resorting to the strictly controlled operating conditions which distinguish the process of the known art described in EP 0 809 429 B1.

In particular, it has been found that by using a specific slow polymerization prepolymer such as 1,1'-methylenebis(isocyanatebenzene), called MDI, the mixing phase between the prepolymer and the water-based paste is reduced to a period of time of less than 20 seconds, preferably 10 seconds and even more preferably to a period of time ranging from 0.5 to 3 seconds.

Furthermore, the use of a prepolymer with a low reactivity of the MDI type as a starting material not only allow the mixing of the components in a reduced period of time but also enables the use of water at room temperature, making the temperature reduction process of the water practically superfluous.

As the mixing conditions of the initial paste no longer require the strict control imposed by the known art, a greater flexibility and a considerable operating simplification of the preparation process are obtained with the present invention.

The process of the invention typically allows the production of a biodegradable aggregate composite substrate comprising 50-85% with respect to the product as such of water, 8-20% of a matrix of a natural origin; 1-10% of a slow polymerization prepolymer such as MDI and having suitable porosity and flexibility characteristics for hosting root systems of the plants.

Within the scope of the invention, the term matrix of a natural origin comprises: peat, soil, peat amending compound, green and/or mixed composted amendant, coconut fiber, bark, kenaf fiber, hemp, cotton and Miscanthus, paper and secondary raw materials of the textile, food, paper and wood industries, pennon, wool waste, oil-extracted panels, toasted leather, integrated pellicle, carbohydrates, and their mixtures.

In particular, peat is among the preferred matrixes of an organic nature.

According to an embodiment of the process of the invention, in the mixing phase of the paste, it is also possible to add one or more carbohydrates. Suitable carbohydrates are starchy substances, such as cereal meal, sugars, molasses and their mixtures. The carbohydrates exert, within the scope of the composite of the invention, both an adhering function and a nutritive source thanks to the presence of carbon.

Furthermore, in the initial paste, it is also possible to add one or more mineral components such as: zeolites, rock wool, pozzolan, pumice, vermiculite, perlite, expanded clay, bentonite, and their mixtures, in proportions, typically equal to 0.1-10% with respect to the product as such. Zeolite is the preferred mineral component.

Suitable zeolites can be of a synthetic or natural nature, among which, in particular, clinoptiloliths. These mineral fractions have the capacity of retaining water, air and nutritive components of the aggregate substrate and, in the type of embodiment in question, they contribute to exerting a complementary action as a binding agent, when suitably mixed with the polyurethane polymer, and also as a substrate for the settlement of microbial flora which effects the biodegradation of the aggregate substrate.

According to another embodiment of the invention, one or more of the following substances can be added to the initial paste: fertilizers, wetting agents, phyto-drugs, pH and salinity regulators, strains of microorganisms with a phyto-protective action and nutrition coadjuvant (among which, for example: Tricoderma viridis, Azospirillum brazilense, Rhizobium spp., Micorrize, etc.).

It is also conveniently possible to add to the substrate according to the invention either bare or coated seeds, preferably of the lawn species, and more preferably of plants selected from Festuca arundinacaea, Festuca rubra, Lolium perenne, Agrostis stolonifera, Dichondra repens, Poa pratensis and Cynodon dactylon, and vegetative parts which are suitable for the multiplication of plants, preferably stolons and cuttings, more preferably stolons of Cynodon dactylon, Cynodon dactylon x transvaalensis, Agrostis stolonifera, Paspalum vaginatum, Zoyzia spp. and cuttings of Vitis spp., Olea spp., Pyrus spp., Malus spp., Prunus spp. and aromatic plants, officinal and ornamental.

The order of addition of the various components to the paste is not critical, even though it can be convenient to initially mix the organic matrix of a natural origin with water and in a subsequent phase add the slow polymerization prepolymer, preferably based on MDI. When the MDI prepolymer comes into contact with water, the hardening process is triggered, which causes the formation of polyurethane cells englobing air (macroporosity) and water (microporosity).

The mixing phase of the components is effected under operating conditions which vary in relation to the type of matrix of a natural origin used. Denser or harder starting materials require more vigorous stirring whereas softer materials are mixed more lightly according to common operating procedures in the field of the art.

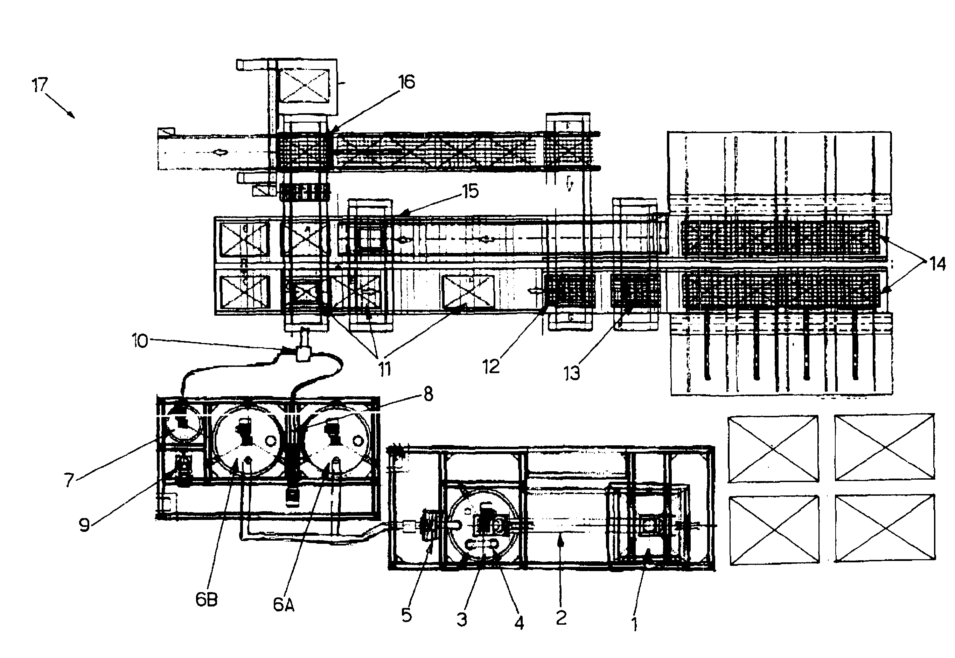

The characteristics and advantages of the production process according to the present invention will appear more evident from the following illustrative and nonlimiting description, referring to the enclosed schematic drawing in which:
the figure illustrates an embodiment of a plant for the preparation of a biodegradable composite substrate according to the invention.

With reference to the enclosed figure, the production plant 17 of the composite substrate comprises a weight hopper 1 of the aggregate on load cells, an Archimedean screw 2 for transporting the aggregate, a tank 3 for mixing the aggregate/water and any other possible components on load cells, at least one feeding tube 4 of the water of said tank 3, a motorized calibrator 5, conveniently positioned on the discharge of said tank 3, process tanks 6 A and B with a stirrer on load cells, a tank 7 for the low reactivity MDI prepolymer on load cells, a pump 8 preferably of the single-screw type for conveying the aggregate, a gear pump 9 for the low reactivity (MDI) prepolymer, at least one dynamic mixing head 10 connected to the pumps with heated tubes, at least one containment tray 11 of the semi-fluid mixture or paste formed, at least one grid 12 for the formation of cubes of composite substrate, a lid 13 for the formation of holes in the cubes. The plant is also conveniently equipped with a lifting-lowering storage container 14 of the trays and unloading 14 and extraction 15 runs of the substrate produced.

The plant 17 is preferably of the completely automated type, all the phases of the production cycle being operated and controlled by means of software.

According to an embodiment of the invention, the matrix of a natural origin, preferably based on peat, is initially charged into the hopper 1 of the production plant 17. The organic matrix is transferred through the Archimedean screw 2 and sent into the mixing tank 3 in which water is added to have a ratio preferably ranging from 0.3:1 to 0.6:1.

The components can then be mixed for a time typically varying from 10 to 60 minutes, advantageously passing the components through the calibrator 5 in the recycling phase.

The paste (slurry) formed by the mixing phase is discharged into tanks 6A and 6B which are kept at a temperature conveniently ranging from 25°C to 30°C, a temperature which is suitable for the proliferation of the microorganisms contained in the paste.

The tank (7) of the low reactivity prepolymer, typically MDI, brought to a temperature preferably ranging from 35°C to 45°C, is supplied directly by a feeding cistern.

An automatic control advantageously sends the paste contained in the tank 6 and the low reactivity prepolymer contained in the tank 7 to the mixing head 10 in a ratio preferably ranging from 1:0.06 to 1:0.12. The result of the mixing, which is substantially instantaneous, with times typically ranging from 0.1 to 3 seconds, preferably having a temperature ranging from 30°C to 37°C, is sent to the containment tray 11 for a time suitable for reaching the pre-established quantity, typically ranging from 2,000 gr. to 3,500 gr. in relation to the format of the cubes of substrate which are to be obtained.

A grid 12 is placed on the tray 11 filled with the mixed compound, which allows the formation of cubes directly during the expansion phase of the product. A lid 13 is then positioned, which allows the expansion to be controlled and also forms a hole at the top of the cube for the deposition of seeds or vegetative parts. The tray thus arranged is positioned in the mobile storage container for the time necessary for the curing of the product (from 15 to 30 minutes). The tray then reaches the phase in which the lid 13 and the grid 12 are removed. The cubes are subsequently extracted and stacked.

After the curing phase, the aggregate material typically has the following indicative composition (Table 1) .

**Table 1 - Physico-chemical and microbiological characteristics of an embodiment of the aggregate substrate of the invention.**

| Parameters | Measurement unit | Most frequent value range |
|---|---|---|
| Humidity | % | 60-80 |
| Apparent specific weight | KgL⁻¹ | 0.5-0.6 |
| pH | | 5.5-6.5 |
| Electric conductivity | µScm⁻¹ | 200-300 |
| Total nitrogen | % | 4-6 |
| Total bacterial charge | UFCg⁻¹ | 1-3 10⁶ |
| Enterobacteria | UFCg⁻¹ | 1.5-2 10³ |
| Yeasts | UFCg⁻¹ | 5-7 10³ |
| Salmonella spp. | 25 g | Absent |

According to an embodiment of the invention, the aggregate substrate of the invention is used in the production of seed-trays suitable for the growth of seedlings and having typical shapes such as cylindrical, cubic, truncated-conical, parallelepiped, or flat tile-shaped or square. The substrate or seed-tray of the invention, containing the germinated seed or seedling, is then sown, transplanted or planted in suitable mediums or cultivation environments.

Parallelepiped-shaped seed-trays are provided, for example, which can be classified in three types of base with the following dimensions: small (3.0 x 1.8 x 1.8 cm), medium (3.0 x 2.8 x 2.8 cm) and large (4.0 x 2.8 x 2.8 cm). At the top of the parallelepiped there is typically a X-shaped hole to allow the deposition of the seed or introduction of the vegetative parts. A second type of seed-tray, on the other hand, is characterized by an apical hemispherical hole in which the seed is deposited.

In another embodiment, the aggregate substrate is produced, on the other hand, in mats or tiles which already contain seeds or vegetative parts suitable for the multiplication of plants. These mats preferably have a thickness of 15-30 mm and dimensions of 30 x 60 cm, even if they can be prepared in the widest variety of geometrical and figurative forms.

Once the aggregate substrate has been introduced into the agrarian ground, it is more easily biodegraded than analogous known aggregate substrates.

The biodegradation of some embodiments of the substrate of the invention is completed within a period of 6-12 months, depending on the environmental conditions

The aggregate substrate of the invention can also easily sustain microbiological life, thanks to the presence of the coformulants envisaged, among which above all carbohydrates and zeolites. It is therefore particularly suitable for the life of plants which favour the establishment of exchange relationships with microorganisms, such as: Azospirilli, Rizobi and Micorrize.

The following examples are provided for purely illustrative purposes of the present invention and should not be considered as limiting its protection scope, as defined by the enclosed claims.

### Example 1

A productive cycle was effected in which 95 Kg of black peat and 195 Kg of water were sent to the mixing tank where they were mixed for 60 min. The resulting paste was discharged into the tanks 6A and 6B which were kept at a temperature of 30°C. The tank 7, maintained at a controlled temperature of 45°C, was fed with an MDI-based prepolymer. The ratio between the prepolymer and the mixture of water and peat was established at 0.10:1. The temperature of the mixed compound proved to be 35°C. 2,700 g of mixed compound were sent to the containment tray. After a curing time of 20 minutes, 486 cubes having dimensions of 20x20x30 mm were obtained, with a cross-shaped hole at the top of the cube, 15 mm deep.

The data is provided below relating to the analysis of the cubes produced according to this cycle and with the materials indicated.

| | |
|---|---|
| Ash % | 4.78 |
| Apparent density Kg/m³ | 111.4 |
| Easily available water % | 8.68 |
| Total porosity | 92.96 |
| Water volume -10 cm % | 45.78 |
| Water volume -50 cm % | 37.10 |
| Easily available water % | 8.68 |

### Example 2

A productive cycle was effected in which 80 Kg of black peat and 15 Kg of coconut peat and 195 Kg of water were sent to the mixing tank where they were mixed for 40 min. The resulting paste was discharged into the tanks 6A and 6B which were kept at a temperature of 30°C. The tank (7), maintained at a controlled temperature of 45°C, was fed with an MDI-based prepolymer. The ratio between the prepolymer and the mixture of water and peat was established at 0.07:1. The temperature of the mixed compound proved to be 35°C. 3,500 g of mixed compound were sent to the containment tray. After a curing time of 30 minutes, 216 cubes having dimensions of 30x30x45 mm were obtained, with a cross-shaped hole at the top of the cube, 20 mm deep.

The data is provided below relating to the analysis of the cubes produced according to this cycle and with the materials indicated.

| | |
|---|---|
| Ash % | 6.25 |
| Apparent density Kg/m³ | 109.08 |
| Easily available water % | 10.3 |
| Total porosity | 93.14 |
| Water volume -10 cm % | 50.83 |
| Water volume -50 cm % | 40.53 |
| Easily available water % | 10.3 |

### Example 3

An embodiment of the present invention was prepared in which the aggregate substrate was obtained by mixing a formulation consisting of: water (60% w/w a.s.), black peat (29% w/w a.s.), polyurethane prepolymer of the type methylenebis-isocyanatebenzene (MDI) (6% w/w), molasses (3% w/w) and zeolite (2% w/w). This formulation - after suitable mixing and at the end of the curing phase - had a humidity degree of 82% w/w. The substrate in question was prepared in different forms (cubes, tiles, strips) according to the specific purposes.

### Example 4

An embodiment of the present invention was prepared in which the aggregate substrate was obtained by mixing a formulation consisting of: water (60% w/w), green composted amendant (26% w/w), MDI polyurethane prepolymer (7% w/w), cereal flour (5% w/w) and clinoptilolite (2% w/w). This formulation - after suitable mixing and at the end of the curing phase - had a humidity degree of 76% w/w. The substrate in question was prepared in different forms according to the specific purposes (cubes, tiles, strips, etc.).

### Example 5

An embodiment of the present invention was prepared in which the formulation of Example 3, after the addition of water and suitable mixing, was left to cure on a bed consisting of a thin layer of expanded clay, having a particle-size of 1.5-2.5 mm. An aggregate substrate was thus obtained which englobes a draining layer of expanded clay in its underlying part. Other suitable materials which can advantageously substitute expanded clay for this purpose have also proved to be rock wool and perlite. Once ready, the substrate in question can be prepared in various forms according to the specific purposes (cubes, tiles, strips, etc.).

### Example 6

A germination test of a series of vegetable species was effected on the aggregate substrate of Example 3 compared to peat. The test was carried out in a controlled environment, under the conditions defined by the Official Seed Analysis Methods (MAF, 1992). The results are specified in Table 2 below.

**Table 2 - Percentage of germinated seeds with respect to the whole.**

| Species | Seed-tray of the invention % | Peat % |
|---|---|---|
| *Lycopersicon esculentum* | 100 | 80 |
| *Cucumis melo* | 85 | 65 |
| *Solanum melongena* | 99 | 100 |
| *Lactuca sativa* | 90 | 95 |
| *Cycorium intybus* | 69 | 55 |
| *Cichorium indivia* | 80 | 65 |
| *Eruca sativa* | 93 | 85 |
| *Lepidium sativum* | 100 | 100 |
| *Valeriana officinalis* | 85 | 75 |

## Claims

1. A process for the preparation of a composition substrate for the growth of gamic or agamic propagation plants which comprises mixing a matrix of a natural origin, water and a hydrophilic polyurethane prepolymer to provide a paste, pouring said paste into at least one container and leaving said paste to harden in said container, said process being **characterized in that** the hydrophilic polyurethane polymer is a slow polymerization polymer and said mixing phase is carried out for a period of less than 20 seconds.

2. The process according to claim 1, **characterized in that** said slow polymerization polymer is based on 1, 1' - methylenebis(isocyanatebenzene) (MDI).

3. The process according to claim 1, **characterized in that** said mixing phase is carried out for a period of less than 20 seconds, preferably less than 10 seconds, more preferably from 0.1 to 3 seconds, at a temperature ranging from 25 to 40°C.

4. The process according to any of the claims 1-3, **characterized in that** it comprises a preliminary mixing phase of said matrix of an original nature with water to provide a semi-fluid paste and the subsequent feeding of a MDI-based polyurethane prepolymer to said semi-fluid paste.

5. The process according to claim 4, **characterized in that** the ratio between the MDI-based polyurethane prepolymer and the semi-fluid paste based on a matrix of a natural origin and water ranges is 0.01-0.2:1.

6. The process according to any of the claims 1-5, **characterized in that** said matrix of a natural origin is selected from the group comprising peat, soil, peat amending compound, green and/or mixed composted amendant, coconut fiber, bark, kenaf fiber, hemp, cotton and Miscanthus, paper and secondary raw materials of the textile, food, paper and wood industries, pennon, wool waste, oil-extracted panels, toasted leather, integrated pellicle, carbohydrates, and their mixtures.

7. The process according to claim 6, **characterized in that** said matrix of a natural origin is peat.

8. The process according to any of the claims 1-7, **characterized in that** said semi-fluid paste also comprises one or more mineral components.

9. The process according to claim 8, **characterized in that** said mineral component is a zeolite.

10. The process according to any of the claims 1-9, **characterized in that** said semi-fluid paste also comprises one or more substances selected from fertilizers, wetting agents, phyto-drugs, pH and salinity regulators, strains of microorganisms with a phyto-protective action and nutrition coadjuvant.

11. The process according to any of the claims 1-10, **characterized in that** said container is a mould or tray on which a grid is positioned to give the substrate a pre-established form.

12. The process according to any of the claims 1-11, **characterized in that** it also comprises an incorporation phase of seeds and/or vegetative parts of plants.

13. The process according to any of the claims 1-12, **characterized in that** it comprises the following phases:
- mixing the aggregate of a natural origin with water in a container to form a semi-fluid paste;
- mixing said semi-fluid paste with an MDI-based polyurethane prepolymer;
- transferring the resulting material to a container on which a grid is positioned to give the substrate a pre-established form;
- positioning a lid on the container equipped with a grid to control the hardening of the mixture and expansion of the polyurethane polymer.

## Patentansprüche

1. Verfahren zur Herstellung einer Substratzusammensetzung für das Wachstum von Pflanzen mit gamer oder agamer Fortpflanzung, welches das Vermischen einer Matrix natürlichen Ursprungs, von Wasser sowie eines hydrophilen Polyurethanpräpolymers, um eine Paste bereitzustellen, das Gießen der Paste in wenigstens einen Behälter sowie das Belassen der Paste in dem Behälter, um diese auszuhärten, umfasst, wobei das Verfahren **dadurch gekennzeichnet ist, dass** das hydrophile Polyurethanpolymer ein langsam polymerisierendes Polymer ist und die Vermischungsphase für eine Zeitspanne von weniger als 20 Sekunden durchgeführt wird.

2. Verfahren nach Anspruch 1, **dadurch gekennzeichnet, dass** das langsam polymerisierende Polymer auf 1, 1'-Methylen-bis-isocyanatbenzol (MDI) basiert.

3. Verfahren nach Anspruch 1, **dadurch gekennzeichnet, dass** die Vermischungsphase für eine Zeitspanne von weniger als 20 Sekunden, vorzugsweise von weniger als 10 Sekunden und besonders bevorzugt zwischen 0,1 und 3 Sekunden bei einer Temperatur in einem Bereich zwischen 25 und 40 °C durchgeführt wird.

4. Verfahren nach einem der Ansprüche 1 bis 3, **dadurch gekennzeichnet, dass** es eine vorausgehende Vermischungsphase der Matrix natürlichen Ursprungs mit Wasser umfasst, um eine halbflüssige Paste bereitzustellen, sowie die nachfolgende Zugabe eines auf MDI basierenden Polyurethanpräpolymers zu der halbflüssigen Paste umfasst.

5. Verfahren nach Anspruch 4, **dadurch gekennzeichnet, dass** das Verhältnis zwischen dem auf MDI basierenden Polyurethanpräpolymer und der halbflüssigen, auf einer Matrix natürlichen Ursprungs sowie Wasser basierenden Paste in einem Bereich zwischen 0,01 - 0,2:1 liegt.

6. Verfahren nach einem der Ansprüche 1 bis 5, **dadurch gekennzeichnet, dass** die Matrix natürlichen Ursprungs aus der Gruppe ausgewählt ist, welche aus Torf, Erdboden, einer Torf verändernden Verbindung, grünem und/oder vermischten kompostiertem Veränderungsmittel, Kokosnussfaser, Baumrinde, Kenaf-Faser, Hanf, Baumwolle und Miscanthus, Papier sowie sekundären Rohmaterialien der Textil-, Lebensmittel-, Papier- und Holzindustrien, Federn, Wollabfall, öl-extrahierten Panelen, geröstetem Leder, integriertem Pellikel, Kohlenhydraten und deren Mischungen besteht.

7. Verfahren nach Anspruch 6, **dadurch gekennzeichnet, dass** die Matrix natürlichen Ursprungs Torf ist.

8. Verfahren nach einem der Ansprüche 1 bis 7, **dadurch gekennzeichnet, dass** die halbflüssige Paste des weiteren eine oder mehrere Mineralkomponenten enthält.

9. Verfahren nach Anspruch 8, **dadurch gekennzeichnet, dass** die Mineralkomponente ein Zeolith ist.

10. Verfahren nach einem der Ansprüche 1 bis 9, **dadurch gekennzeichnet, dass** die halbflüssige Paste des weiteren ein oder mehrere Substanzen ausgewählt aus Düngemitteln, Benetzungsmitteln, Pflanzenmedikamenten, pH- und Salinitätsregulatoren, Stämmen von Mikroorganismen mit einer Pflanzen schützenden Wirkung sowie Nahrungskoadjuvantien enthält.

11. Verfahren nach einem der Ansprüche 1 bis 10, **dadurch gekennzeichnet, dass** der Behälter eine Form oder eine Wanne ist, auf der ein Gitter positioniert ist, um dem Substrat eine voreingestellte Form zu geben.

12. Verfahren nach einem der Ansprüche 1 bis 11, **dadurch gekennzeichnet, dass** dieses des Weiteren eine Einbauphase von Keimen und/ oder von vegetativen Teilen von Pflanzen umfasst.

13. Verfahren nach einem der Ansprüche 1 bis 12, **dadurch gekennzeichnet, dass** es die nachfolgenden Phasen umfasst:
- Vermischen des Aggregats natürlichen Ursprungs mit Wasser in einem Behälter, um eine halbflüssige Paste zu bilden,
- Vermischen der halbflüssigen Paste mit einem auf MDI basierenden Polyurethanpräpolymer,
- Überführen des resultierenden Materials zu einem Behälter, auf dem ein Gitter positioniert ist, um dem Substrat eine voreingestellte Form zu geben,
- Positionieren eines Deckels auf dem mit einem Gitter ausgestatteten Behälter, um das Aushärten der Mischung und die Expansion des Polyurethanpolymers zu steuern.

## Revendications

1. Procédé pour la préparation d'une composition substrat pour la croissance de plantes à dissémination gamique ou agamique, qui consiste à mélanger une matrice d'origine naturelle, de l'eau et un prépolymère de polyuréthane hydrophile pour donner une pâte, à verser ladite pâte dans au moins un récipient et à laisser ladite pâte durcir dans ledit récipient, ledit procédé étant **caractérisé en ce que** le polymère de polyuréthane hydrophile est un polymère à polymérisation lente et ladite phase de mélange est réalisée pendant une durée de moins de 20 secondes.

2. Procédé selon la revendication 1, **caractérisé en ce que** ledit polymère à polymérisation lente est à base de 1,1'-méthylènebis (isocyanatobenzène) (MDI).

3. Procédé selon la revendication 1, **caractérisé en ce que** ladite phase de mélange est réalisée pendant une durée de moins de 20 secondes, de préférence de moins de 10 secondes, plus préférentiellement de 0,1 à 3 secondes, à une température allant de 25 à 40°C.

4. Procédé selon l'une quelconque des revendications 1 à 3, **caractérisé en ce qu'**il comprend une phase de mélange préliminaire de ladite matrice d'origine naturelle avec de l'eau pour donner une pâte semi-fluide et le chargement ultérieur du prépolymère de polyuréthane à base de MDI dans ladite pâte semi-fluide.

5. Procédé selon la revendication 4, **caractérisé en ce que** le rapport entre le prépolymère de polyuréthane à base de MDI et la pâte semi-fluide à base de matrice d'origine naturelle et d'eau va de 0,01 à 0,2/1.

6. Procédé selon l'une quelconque des revendications 1 à 5, **caractérisé en ce que** ladite matrice d'origine naturelle est choisie dans le groupe constitué par la tourbe, la terre, un composé modificateur de la tourbe, un modificateur vert et/ou composté mixte, la fibre de noix de coco, l'écorce, la fibre de kénaf, le chanvre, le coton et le miscanthus, le papier et les matières brutes secondaires des industries du textile, des produits alimentaires, du papier et du bois, le pennon, les chutes de laine, les panneaux extraits de l'huile, le cuir brûlé, les pellicules intégrées, les hydrates de carbone et leurs mélanges.

7. Procédé selon la revendication 6, **caractérisé en ce que** ladite matrice d'origine naturelle est la tourbe.

8. Procédé selon l'une quelconque des revendications 1 à 7, **caractérisé en ce que** ladite pâte semi-fluide comprend aussi un ou plusieurs composants minéraux.

9. Procédé selon la revendication 8, **caractérisé en ce que** ledit composant minéral est une zéolithe.

10. Procédé selon l'une quelconque des revendications 1 à 9, **caractérisé en ce que** ladite pâte semi-fluide comprend aussi une ou plusieurs substances choisies parmi les fertilisants, les agents mouillants, les phytosanitaires, les régulateurs de pH et de salinité, les souches de micro-organismes ayant une action phytoprotectrice et les co-adjuvants nutritionnels.

11. Procédé selon l'une quelconque des revendications 1 à 10, **caractérisé en ce que** ledit récipient est un moule ou un bac sur lequel une grille est positionnée pour donner au substrat une forme préétablie.

12. Procédé selon l'une quelconque des revendications 1 à 11, **caractérisé en ce qu'**il comprend aussi une phase d'incorporation de graines et/ou de parties végétatives de plantes.

13. Procédé selon l'une quelconque des revendications 1 à 12, **caractérisé en ce qu'**il comprend les phases suivantes :
- mélanger l'agrégat d'origine naturelle avec l'eau dans un récipient pour former une pâte semi-fluide ;
- mélanger ladite pâte semi-fluide avec un prépolymère de polyuréthane à base de MDI ;
- transférer la matière résultante dans un récipient sur lequel une grille est positionnée pour donner au substrat une forme préétablie ;
- positionner un couvercle sur le récipient équipé d'une grille pour contrôler le durcissement du mélange et l'expansion du polymère de polyuréthane.
